# NEUE EUROPÄISCHE PATENTSCHRIFT

(11) **EP 2 794 935 B2**
(45) Veröffentlichungstag und Bekanntmachung des Hinweises auf die Entscheidung über den Einspruch: **11.12.2019**
(45) Hinweis auf die Patenterteilung: 11.01.2017
(21) Anmeldenummer: 12775468.7
(22) Anmeldetag: 02.10.2012
(51) Int. Cl.: C21D 1/26, C21D 9/00, C22C 38/00, B21D 51/38, C21D 1/42, C21D 9/46, C22C 38/02, C22C 38/04, C22C 38/06, C22C 38/42, C22C 38/44

(54) **AUFREISSDECKEL FÜR DOSEN SOWIE VERFAHREN ZUR HERSTELLUNG EINES AUFREISSDECKELS**
EASY-OPEN LID FOR CANS AND METHOD TO PRODUCE AN EASY-OPEN LID
COUVERCLE À OUVERTURE FACILE ET PROCÉDÉ POUR LA FABRICATION D'UNE COUVERCLE À OUVERTURE FACILE

(30) Priorität: 22.12.2011 DE 102011056846
(43) Veröffentlichungstag der Anmeldung: 29.10.2014
(73) Patentinhaber: ThyssenKrupp Rasselstein GmbH, 56626 Andernach (DE)
(72) Erfinder: FRIEDRICH, Karl Ernst, 47447 Moers (DE); MATUSCH, Dirk, 56567 Neuwied (DE); KAUP, Burkhard, 56626 Andernach (DE); SAUER, Reiner, 56566 Neuwied (DE)
(74) Vertreter: Charrier Rapp & Liebau
(86) Internationale Anmeldenummer: PCT/EP2012/069464
(87) Internationale Veröffentlichungsnummer: WO 2013/091922

(56) Entgegenhaltungen:
- JP-A- 63 014 818
- JP-A- H08 311 609
- JP-A- H10 251 799
- JP-A- 2001 107 187
- US-A- 4 698 103
- US-B1- 6 638 380
- DATABASE WPI Week 198750 Thomson Scientific, London, GB; AN 1987-352727 XP002689556, -& JP 62 256942 A (NIPPON STEEL CORP) 9. November 1987 (1987-11-09)
- Lucas Et Al: "Production of high quality formable grades in an ultra short annealing processing line", Final Report for the European Commission, 2007, XP055425358, ISBN: 92-79-04599-8
- "CANMAKING, the technology of metal protection and decoration" In: TURNER, T.A.: "Design and Development of easy-open-ends", 1998, Blackie Academic & Professional, London ISBN: 0751403954 pages 1-2-178-185,
- TURNER, T.A.: "Canmaking for Can Fillers", Sheffield Academic Press ISBN: 1-84127-220-5
- "Processing- Cold Working and Annealing" In: "Materials Science and Technology", 1992, VCH, Sheffield ISBN: 3-527-26820-0 vol. Bd. 7, page 258,

## Beschreibung

Die Erfindung betrifft einen Aufreißdeckel für Dosen sowie ein Verfahren zur Herstellung eines Aufreißdeckels aus einem mit einer Schutzschicht versehenen Stahlblech .

Zum Verpacken von Nahrungsmitteln und Getränken sind Dosen sehr beliebt, die leicht und ohne Zuhilfenahme von Werkzeugen geöffnet werden können. Solche Dosen weisen einen Aufreißdeckel auf, welcher mittels einer manuell ergreifbaren Lasche entlang einer Einkerbung im Material der Dose aufgezogen werden kann. Eine Getränkedose aus Metall mit einem mittels einer Aufreißlasche längs einer Kerblinie aufreißbaren Aufreißdeckel ist bspw. aus der EP 0 381 888-A bekannt.

Derartige Dosen mit einem Aufreißdeckel werden in der Regel entweder aus Aluminiumblech oder aus einem mit einer korrosionsbeständigen Schutzschicht versehenen Stahlblech gefertigt. Wegen der geringeren Kosten haben beschichtete Stahlbleche gegenüber Aluminium Vorteile. Allerdings hat sich gezeigt, dass bei Aufreißdeckeln aus Stahlblech eine höhere Öffnungskraft zum Aufreißen des Aufreißdeckels notwendig ist, verglichen mit Aluminium-Aufreißdeckeln.

In der DE 35 12 687 C2 wird ein Verfahren zum Herstellen von Stahlblechen für leicht zu öffnende Dosendeckel aufgezeigt, mit dem ein Aufreißdeckel herstellbar ist, welcher ein leichteres Öffnen der Dose ermöglicht ohne eine zu starke Verringerung der verbleibenden Metallwandstärke im Bereich der Einkerbung vorzusehen. Die DE 35 12 687 C2 schlägt hierfür die Verwendung eines Stahls mit einem Kohlenstoffgehalt im Bereich von 0,01 Gew. % bis 0,051 Gew.-% und den Legierungsbestandteilen Silizium im Bereich von 0,01 bis 0,02 Gew.-%, Mangan im Bereich von 0,32 bis 0,35 Gew.-%, Phosphor im Bereich von 0,018 bis 0,022 Gew.-% und Aluminium im Bereich von 0,07 bis 0,09 Gew.-% vor. Der Stahl wird zunächst warmgewalzt und dann nach einem Kaltwalzschritt geglüht und anschließend erfolgt ein zweiter Kaltwalzschritt. Nach dem Kaltwalzen werden die Stähle gereinigt, in einem Zinnbad verzinnt und anschließend zur Herstellung eines Aufreißdeckels endbearbeitet.

Weitere Verfahren zur Herstellung von Aufreißdeckeln aus Stahlblechen sind aus der DE 20 10 631 und der DE 42 40 373 A1 bekannt, wobei zunächst auf einer Stahlblechtafel oder auf einem Stahlblechband Prägelinien für eine Vielzahl von Aufreißdeckeln erzeugt werden und danach die vorgeprägte Blechtafel bzw. das vorgeprägte Blechband mit einer Schutzschicht beschichtet und anschließend die Aufreißdeckel ausgestanzt werden. Als Schutzschicht kommt hierbei eine Lackierung oder eine Verzinnung oder Verchromung des Stahlblechs oder auch, wie in der DE 42 40 373 A1 vorgeschlagen, eine auf die Blechtafel bzw. das Blechband auflaminierte Kunststofffolie in Betracht. Die Schutzschicht kann ein- oder beidseitig aufgebracht werden und verleiht dem Stahlband bzw. -blech eine hohe Korrosionsstabilität, weshalb daraus gefertigte Dosen auch zur Verpackung aggressiver Lebensmittel oder Getränke verwendet werden können.

Die JP 102511799-A offenbart ein Stahlblech zur Herstellung von Dosendeckeln aus einem Stahl mit ≤ 0,02 Gew.% C, ≤ 0,05 Gew.% Si, ≤ 0,6 Gew.% Mn, ≤ 0,02 Gew.% S, 0,01 bis 0,02 Gew.% B, ≤ 0,01 Gew.% Al, ≤ 0,02 Gew.% N und 0,01 bis 0,03 Gew.% O und ggf. mit vorgegebenen Mengen an Nb, Ti, Cr und Mo und dem Rest Eisen und unvermeidbare Verunreinigungen, wobei das Stahlblech bei Temperaturen von ≥ 800°C gewalzt und nach einem Aufrollen primär kaltgewalzt und rekristallisationsgeglüht geglüht und schließlich sekundär kaltgewalzt wird.

Der Erfindung liegt die Aufgabe zugrunde, ein Stahlblech bereitzustellen, mit dem Aufreißdeckel herstellbar sind, welche bei gleichbleibender Restwanddicke der Kerblinie eine geringere Aufreißkraft aufweisen als die aus dem Stand der Technik bekannten Aufreißdeckel aus Stahlblech.

Gelöst wird diese Aufgabe durch einen Aufreißdeckel gemäß Anspruch 1 sowie durch das Verfahren zur Herstellung eines Aufreißdeckels gemäß Anspruch 8. Bevorzugte Ausführungsformen des Aufreißdeckels bzw. des Verfahrens sind in den abhängigen Ansprüchen aufgezeigt.

Die Erfindung schlägt die Verwendung eines mit einer Schutzschicht versehenen Stahlblechs zur Herstellung eines Aufreißdeckels vor, wobei das Stahlblech aus einem un- oder niedriglegiertem Stahl mit einem Kohlenstoffgehalt von weniger als 0,1 Gew.-% gefertigt ist und das Stahlblech vor dem Aufbringen der Schutzschicht einer Wärmebehandlung unterzogen wird, in der das Stahlblech zunächst rekristallisierend (und austenitisierend) bei einer Aufheizrate von mehr als 75 K/s und bevorzugt von mehr als 200 K/s geglüht und danach unter Verwendung einer Wasserkühlung mit einer Kühlrate von mehr als 1000 K/s abgekühlt wird. Nach dieser Wärmebehandlung wird das Stahlblech mit einer Schutzschicht beschichtet und in bekannter Weise zur Herstellung von Aufreißdeckeln bzw. zur Herstellung von Dosen mit einem Aufreißdeckel weiter verarbeitet. Soweit im Folgenden von Stahlblech gesprochen wird, werden darunter Blechtafeln oder auch Blechbänder (insbesondere auf Coils gewickelte Bänder) aus Stahl verstanden.

Der für die Herstellung erfindungsgemäßer Aufreißdeckel am besten geeignete Stahl weist weniger als 0,4 Gew.% Mangan, weniger als 0,04 Gew.-% Silizium, weniger als 0,1 Gew.-% Aluminium und weniger als 0,1 Gew.-% Chrom auf. Der Stahl kann Legierungszusätze von Bor und/oder Niob und/oder Titan enthalten um die Festigkeit zu steigern, wobei die Zulegierung von Bor zweckmäßig im Bereich von 0,001-0,005 Gew.-% und die Zulegierung von Niob oder Titan bevorzugt im Bereich von 0,005-0,05 Gew.-% liegt.

Als für das rekristallisierende Glühen des Stahlblechs besonders geeignet hat sich eine Wärmebehandlung des Stahlblechs durch elektromagnetische Induktion erwiesen. Durch Vergleichsversuche konnte gezeigt werden, dass die mittels elektromagnetischer Induktion wärmebehandelten Stahlbleche in der späteren Herstellung von Aufreißdeckeln hinsichtlich der Aufreißkraft die besten Ergebnisse, d.h. die niedrigsten Aufreißkräfte, erzielen. Durch Analysen des wärmebehandelten Stahlblechs wurde festgestellt, dass die mittels elektromagnetischer Induktion rekristallisierend geglühten Stahlbleche nach dem Abkühlen ein mehrphasiges Gefüge aufweisen, welches Ferrit und mindestens einen der Gefügebestandteile Martensit oder Bainit umfasst. Als besonders für die Herstellung von leicht zu öffnenden Aufreißdeckeln geeignete Materialien haben sich dabei solche erfindungsgemäß behandelte Stahlbleche erwiesen, deren Gefügebestandteil zu wenigstens 80 % und bevorzugt zu mehr als 95 % aus Ferrit, Martensit, Bainit und/oder Restaustenit besteht.

Als Ausgangsmaterial für die Durchführung des erfindungsgemäßen Verfahrens zur Herstellung eines Aufreißdeckels wird bevorzugt ein kaltgewalztes Fein- oder Feinstblech verwendet, welches folgende Obergrenzen für die Gewichtsanteile der Legierungsbestandteile aufweist:

| | |
|---|---|
| - C: | 0,1 %, |
| - N: | 0,02 %, |
| - Mn: | 0,4 %, |
| - Si: | 0,04 %, |
| - Al: | 0,1 %, |
| - Cr: | 0,1 %, |
| - P: | 0,03 %, |
| - Cu: | 0,1 %, |
| - Ni: | 0,1 %, |
| - Sn: | 0,04 %, |
| - Mo: | 0,04 %, |
| - andere Legierungsbestandteile: | 0,05 %, |
| - Rest Eisen. | |

Unter Feinblech wird dabei ein Blech mit einer Dicke von weniger als 3 mm verstanden und ein Feinstblech weist eine Dicke von weniger als 0,5 mm auf. Stähle mit der angegebenen Legierungszusammensetzung weisen trotz ihres niedrigen Gehalts an Mangan, Silizium, Aluminium und/oder Chrom nach der erfindungsgemäßen Wärmebehandlung eine sehr hohe Zugfestigkeit von mindestens 500 MPa und gleichzeitig eine hohe Bruchdehnung von mehr als 6 % und in der Regel von mehr als 10 % auf. Es hat sich überraschend gezeigt, dass sich Stahlbleche mit einer solchen Zusammensetzung -nach der erfindungsgemäßen Wärmebehandlung hervorragend zur Herstellung von leicht zu öffnenden Aufreißdeckeln eignen, welche vergleichsweise geringe Aufreißkräfte zum Öffnen des Deckels erfordern.

Nachfolgend wird die Erfindung anhand eines Ausführungsbeispiels unter Bezugnahme auf die begleitenden Zeichnungen näher erläutert. Die Zeichnungen zeigen:
- **Fig. 1**:: Draufsicht auf einen Aufreißdeckel;
- **Fig. 2:**: Schnitt durch den Aufreißdeckel von Fig.1 nach der Linie A-A;
- **Fig. 3**:: Schematische Darstellung eines typischen Verlaufs der für das Aufziehen eines Aufreißdeckels benötigten Aufreißkräfte längs der Kerblinie;
- **Fig. 4:**: Darstellung der Abhängigkeit der für das Aufziehen eines Aufreißdeckels benötigten Aufreißkräfte von der Zugfestigkeit des verwendeten Stahlblechs;
- **Fig. 5**:: Schematische Darstellung einer typischen Glühkurve (Temperatur T des Stahlblechs in Abhängigkeit der Zeit t in Sekunden) für die rekristallisierende Wärmebehandlung des für die erfindungsgemäßen Aufreißdeckel verwendeten Stahlblechs.

Zur Herstellung eines Stahlblechs, aus dem gemäß der Erfindung Aufreißdeckel herstellbar sind, wurden im Stranggießen gefertigte und warmgewalzte sowie auf Coils gewickelte Stahlbänder aus Stählen mit folgender Zusammensetzung verwendet:

| | |
|---|---|
| - C: | max. 0,1%; |
| - N: | max. 0,02 %; |
| - Mn: | max. 0,4 %; |
| - Si: | max. 0,04 %, bevorzugt weniger als 0,02 %; |
| - Al: | max. 0,1 %, bevorzugt weniger als 0,05 %; |
| - Cr: | max. 0,1 %, bevorzugt weniger als 0,05 %; |
| - P: | max. 0,03 %; |
| - Cu: | max. 0,1 %; |
| - Ni: | max. 0,1 %; |
| - Sn: | max. 0,04 %; |
| - Mo: | max. 0,04 %; |
| - V: | max. 0,04 %; |
| - Ti: | max. 0,05 %, bevorzugt weniger als 0,02 %; |
| - Nb: | max. 0,05 %, bevorzugt weniger als 0,02 %; |
| - B: | max. 0,005 % |
| - und andere Legierungsbestandteile sowie Verunreinigungen: | max. 0,05 %, |
| - Rest Eisen. | |

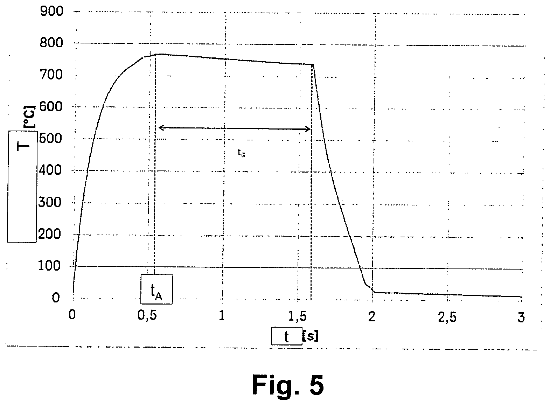

Solche Stahlbleche wurden zunächst unter einer Dickenreduktion von 50% bis 96% bis zu einer Enddicke im Bereich von ca. 0,5 mm kaltgewalzt und anschließend in einem Induktionsofen durch Induktionserwärmung rekristallisierend geglüht.
Hierbei wurde bspw. für eine Probengröße von 20x30 eine Induktionsspule mit einer Leistung von 50kW bei einer Frequenz von -f=200kHz verwendet. Eine typische Glühkurve ist in **Figur 5** gezeigt. Wie der Glühkurve der Figur 5 zu entnehmen ist, wurde das Stahlband innerhalb einer sehr kurzen Aufheizzeit t_{A}, welche typischerweise zwischen ca. 0,5 s und 10 s liegt, auf eine Maximaltemperatur Tₘₐₓ oberhalb der A₁-Temperatur (T (A₁) ≈ 725°C) erhitzt. Die Maximaltemperatur Tₘₐₓ liegt unterhalb der Phasenübergangstemperatur T_{f} des ferromagnetischen Phasenübergangs (T_{f} ≈ 770°C). Die Temperatur des Stahlbands wurde dann über einen Glühzeitraum t_{G} von ca. 0,75 - 1 Sekunde auf einen Temperaturwert oberhalb der A₁-Temperatur aufrechterhalten. Während dieses Glühzeitraums t_{G} hat sich das Stahlband geringfügig von seiner Maximaltemperatur Tₘₐₓ von bspw. 750°C auf die A₁-Temperatur (ca. 725°C) abgekühlt. Danach wurde das Stahlband mittels einer Wasserkühlung innerhalb eines Abkühlinterwals von ca. 0,25 Sekunden auf Raumtemperatur (ca. 23°C) abgekühlt. Nach dem Abkühlen kann erforderlichenfalls noch ein weiterer Kaltwalzschritt mit einer Dickenreduktion von bis zu 40% erfolgen.

Das so behandelte Stahlblech wurde anschließend hinsichtlich seiner Festigkeit und seiner Bruchdehnung untersucht. Durch Vergleichsversuche konnte gezeigt werden, dass in allen Fällen die Bruchdehnung höher als 6% und in der Regel höher als 10% war und dass die Zugfestigkeit mindestens 500 MPa und in vielen Fällen sogar mehr als 650 MPa aufgewiesen hat.

Durch eine Farbniederschlagätzung nach Klemm konnte nachgewiesen werden, dass die erfindungsgemäß behandelten Stahlbleche ein Legierungsgefüge aufweisen, welches Ferrit als weiche Phase und Martensit sowie ggf. Bainit als harte Phase aufweist.

Durch Vergleichsversuche konnte ermittelt werden, dass die besten Ergebnisse hinsichtlich Festigkeit um Umformbarkeit erzielt werden, wenn die Aufheizrate beim rekristallisierenden Induktionsglühen zwischen 200 K/s und 1200 K/s liegt und wenn das rekristallisierend geglühte Stahlband anschließend mit einer Kühlrate von mehr als 1000 K/s abgekühlt wird.

Die besten Ergebnisse bezüglich der Materialeigenschaften werden bei Verwendung einer Wasserkühlung mit Kühlraten von mehr als 1000 K/s erzielt.

Das erfindungsgemäße Stahlblech eignet sich hervorragend zur Verwendung als Verpackungsstahl. So können beispielsweise aus den wärmebehandelten Stahlblechen Aufreißdeckel oder Konserven- oder Getränkedosen mit Aufreißdeckeln gefertigt werden. Da insbesondere im Lebensmittelbereich erhöhte Anforderungen an die Korrosionsbeständigkeit von Verpackungen gestellt werden, ist es zweckmäßig, das erfindungsgemäß hergestellte Stahlblech nach der Wärmebehandlung und ggf. nach einem abschließenden Kaltwalzschritt mit einer metallischen und korrosionsbeständigen Beschichtung zu versehen, beispielsweise durch elektrolytische Verzinnung oder Verchromung. Es können jedoch auch andere Beschichtungsverfahren zur Anwendung kommen, wie z.B. Feuerverzinken oder Lackieren oder auch das Aufkaschieren einer Kunststofffolie. Die Beschichtung kann dabei je nach den Erfordernissen einseitig oder beidseitig erfolgen.

Hinsichtlich der Festigkeit und der Umformbarkeit ist das für die erfindungsgemäße Herstellung von Aufreißdeckeln verwendete Stahlblech vergleichbar mit den aus dem Automobilbau bekannten Dualphasenstählen. Gegenüber den aus dem Automobilbau bekannten Dualphasenstählen zeichnet sich das für die erfindungsgemäße Herstellung von Aufreißdeckeln verwendete Stahlblech jedoch insbesondere durch die wesentlich niedrigeren Herstellkosten und durch den Vorteil aus, dass ein Stahl mit geringer Legierungskonzentration und wenigen Legierungsbestandteilen verwendet wird, weshalb Verunreinigungen der verpackten Lebensmittel durch Diffusion der Legierungsbestandteile vermieden werden können.

Aus wie vorstehend beschrieben hergestellten und wärmebehandelten Stahlbändern oder auch tafelförmigen Stahlblechen wurden Aufreißdeckel für Konserven- oder Getränkedosen hergestellt. Anschließend wurde das Blechband bzw. die Blechtafel ein- oder beidseitig mit einer Oberflächenschutzschicht beschichtet. Die Schutzschicht kann beispielsweise durch Lackieren oder durch Galvanisieren aufgebracht werden. Bei der Schutzschicht kann es sich um einen metallischen Überzug, beispielsweise aus Zinn oder Chrom handeln, der bspw. in einem elektrolytischen Beschichtungsverfahren aufgebracht werden kann. Es kann sich allerdings auch um eine ein- oder mehrschichtige Lackierung oder um einen Kunststofffilm handeln, welcher über ein Laminierverfahren ein- oder beidseitig auf die Oberfläche des Stahlblechs aufgebracht werden kann.

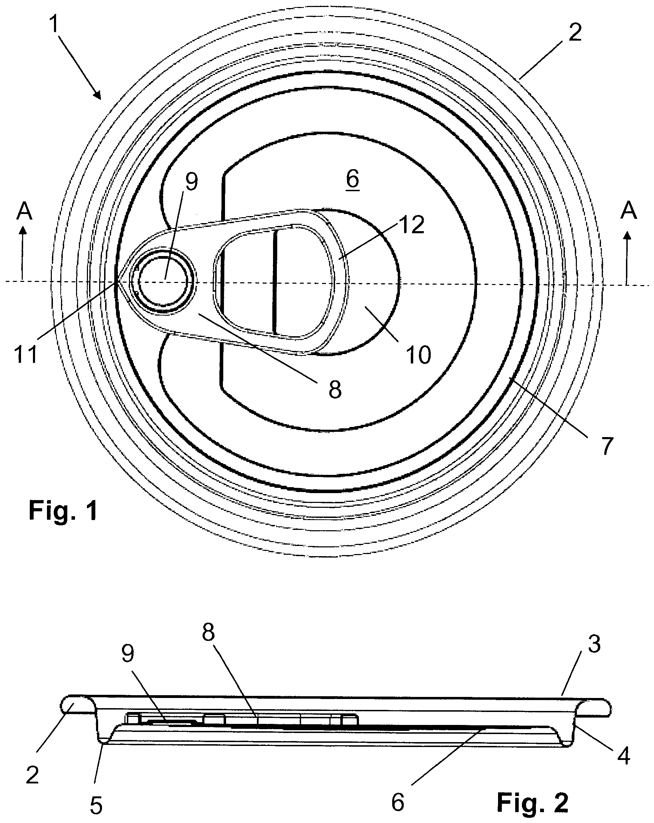

Nach dem Aufbringen der Schutzschicht wurden Deckel aus dem Stahlblech ausgestanzt und geritzt (d.h. mit einer Prägelinie versehen), um einen Deckel zu erhalten, wie er in den Figuren 1 und 2 gezeigt ist.

Der in den Figuren 1 und 2 dargestellte kreisförmige Deckel 1 umfasst einen umgebördelten Randbereich 2, der zur Befestigung des Deckels an einem zylindrischen Rumpf einer Dose durch Auffalzen dient. An den umgebördelten Randbereich 2 schließt sich ein ringförmiger Übergangsbereich 3 an, welcher im Wesentlichen horizontal verläuft und an dem sich ein vertikal nach unten gebogener Abschnitt 4 anschließt. Der Abschnitt 4 endet in einer rinnenförmigen Sicke 5, von wo aus sich ein im Wesentlichen horizontal erstreckender Zentralbereich 6 anschließt. Der Zentralbereich 6 ist von einer vollumfänglich umlaufenden Prägelinie 7 umgeben. Bei der Prägelinie handelt es sich um eine materialverdünnende Einkerbung, welche zweckmäßig einen dreieckigen oder trapezförmigen Querschnitt mit einem geraden oder schrägen Kerbgrund und mit einer Restwanddicke im Bereich von 50 bis 100 µm aufweist. Die Prägelinie 7 dient zum Aufreißen des Aufreißdeckels durch Abtrennen des Zentralbereichs 6 längs der Prägelinie 7 vom äußeren Bereich 2, 3, 4 des Deckels 1.

Im Zentralbereich 6 ist eine Aufreißlasche 8 mit einem Zugring 12 mittels einer Niete 9 befestigt, wobei der Niet aus dem Deckel geformt (d.h. aus dem Deckelmaterial gezogen) wird. Um ein Ergreifen der Aufreißlasche 8 zu ermöglichen, ist im Zentralbereich 6 eine Mulde 10 vorgesehen. Die Aufreißlasche 8 kann manuell an ihrem Zugring 12 hochgezogen werden, wobei das spitz ausgebildete und dem Zugring 12 gegenüberliegende Ende 11 der Aufreißlasche 8 in die Kerblinie 7 eingestochen wird, um dabei zunächst einen lokalen Schlitz in der Kerblinie zu erzeugen. Bei Zug am Zugring 12 der Aufreißlasche 8 wird schließlich die Kerblinie 7 längs ihres gesamten, kreisförmigen Umfangs aufgezogen, wodurch der Zentralbereich 6 des Aufreißdeckels vom äußeren Bereich getrennt und eine Öffnung in dem Aufreißdeckel freigegeben wird.

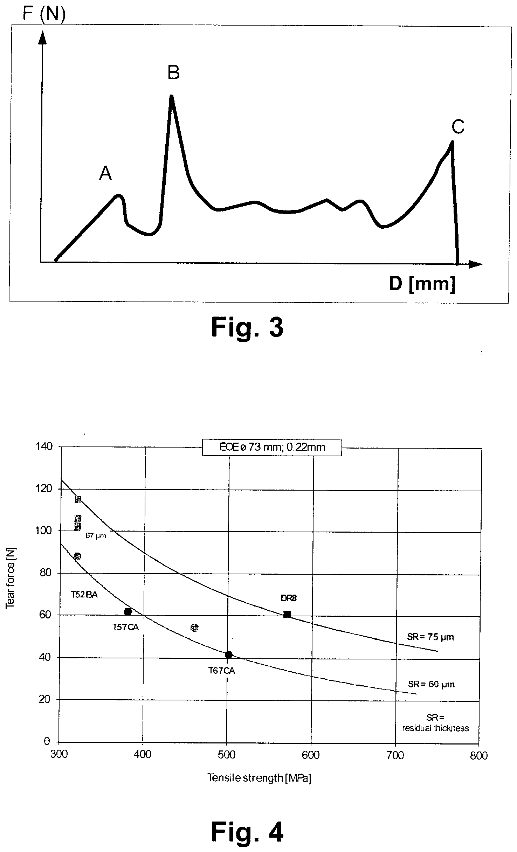

In Fig. 3 ist ein typischer Verlauf der genannten Kräfte F (in Newton) beim Aufreißen eines Vollaufreißdeckels, aufgetragen über den Aufreißweg D längs der Kerblinie dargestellt. Die beim ersten Anheben der Aufreißlasche 8 zum Einstechen eines lokalen Schlitzes in die Kerblinie 7 benötigte Kraft wird als Anreißkraft oder Öffnungskraft A ("score break") bezeichnet. Die durch Zug an der Aufreißlasche 8 zum vollständigen Aufreißen der Kerblinie 7 benötigte Kraft wird als Reißkraft oder Aufreißkraft B ("score tear") bezeichnet. Schließlich wird zum Abziehen des Zentralbereichs 6 vom äußeren Randbereich noch eine als Abreißkraft C ("tear-off") bezeichnete Kraft benötigt, um die Öffnung in dem Aufreißdeckel durch Abziehen des Zentralbereichs 6 vollständig zu öffnen.

Bisher ist man davon ausgegangen, dass die zum Aufreißen eines Aufreißdeckels erforderlichen Kräfte mit steigender Zugfestigkeit bei gleichbleibender Restwanddicke im Bereich der Kerblinie sinken. In **Fig. 4** ist ein typischer Verlauf der (maximalen) Aufreißkraft B ("maximum score tear") in Abhängigkeit der Zugfestigkeit des für die Herstellung des Aufreißdeckels verwendeten Stahlblechs bei zwei verschiedenen Restwanddicken SR (SR = 75 µm und SR = 60 µm) für einen Deckel mit 73 mm Durchmesser und einer Dicke des Stahlblechs von 0,22 mm dargestellt.

Im Rahmen der Vergleichsversuche, die mit den erfindungsgemäß hergestellten Aufreißdeckeln durchgeführt worden sind, hat sich gezeigt, dass es daneben auch noch weitere Einflussgrößen für die Aufreißkräfte gibt. So hängt beispielsweise die Aufreißkraft auch wesentlich vom Kohlenstoffgehalt des verwendeten Stahlblechs ab. Je niedriger der Kohlenstoffgehalt des verwendeten Stahlblechs, desto höher ist die notwendige Aufreißkraft. Weiterhin hat sich gezeigt, dass die zum Öffnen eines Aufreißdeckels erforderlichen Kräfte, insbesondere die maximale Reißkraft, niedriger sind, wenn ein gemäß der Erfindung wärmebehandeltes Stahlblech zur Herstellung des Aufreißdeckels verwendet wird. Die erfindungsgemäß zur Herstellung von Aufreißdeckeln verwendeten Stahlbleche weisen ein mehrphasiges Gefüge auf, welches zumindest Martensit als harte Gefügephase umfasst. Es wird vermutet, dass diese harte Martensit-Phase beim Aufreißen des Aufreißdeckels ein frühes Werkstoffversagen initiiert und so die Aufreißkräfte wesentlich reduziert. Gemäß der Erfindung hergestellte Aufreißdeckel weisen maximale Aufreißkräfte im Bereich von 40 N oder weniger bei einer Restwanddicke von 60 µm und einer Zugfestigkeit des verwendeten Stahlblechs von 500 MPa.

Die Erfindung ist nicht auf das zeichnerisch dargestellte Ausführungsbeispiel beschränkt, welches nur aus Gründen der Erläuterung der Erfindung im Detail dargestellt worden ist. Das erfindungsgemäß für die Herstellung von Aufreißdeckeln vorgeschlagene Stahlblech eignet sich in gleicher Weise auch für die Herstellung anders ausgebildeter Aufreißdeckel und auch für die Herstellung von Dosen mit einem Aufreißdeckel. So können bspw. in entsprechender Weise auch Aufreißdeckel gemäß der Erfindung hergestellt werden, bei denen das Aufreißteil nicht vollständig vom Deckel abgezogen sondern lediglich durch die Aufreißlasche ins Doseninnere gedrückt wird. Desweiteren können die Aufreißdeckel auch eine andere Form aufweisen, bspw. oval, und die Kerblinie kann ebenfalls eine andere Form aufweisen, bspw. oval oder schnecken- bzw. spiralförmig.

## Patentansprüche

1. Aufreißdeckel für Dosen, hergestellt aus einem kaltgewalzten Stahlblech aus einem un- oder niedriglegiertem Stahl mit einem Kohlenstoffgehalt von weniger als 0,1 Gew. % und folgenden Obergrenzen für den Gewichtsanteil der Legierungsbestandteile:
| | |
|---|---|
| - N: | 0,02 %, |
| - Mn: | 0,4 %, |
| - Si: | 0,04 %, |
| - Al: | 0,1 %, |
| - Cr: | 0,1 %, |
| - P: | 0,03 %, |
| - Cu: | 0,1 %, |
| - Ni: | 0,1 %, |
| - Sn: | 0,04 %, |
| - Mo: | 0,04 %, |
| - V: | 0,04 %, |
| - Ti: | 0,05 %, |
| - Nb: | 0,05 %, |
| - B: | 0,005 %, |
| - und andere Legierungsbestandteile: | 0,05 %, |
| - Rest Eisen, | |
wobei das Stahlblech mittels Erhitzung durch elektromagnetische Induktion rekristallisierend bei einer Aufheizrate von mehr als 75 K/s geglüht und nach dem rekristallisierenden Glühen mit einer Kühlrate von mehr als 1000 K/s unter Verwendung einer Wasserkühlung abgekühlt und danach mit einer Schutzschicht beschichtet worden ist und das Stahlblech nach dem rekristallisierenden Glühen und dem Abkühlen eine Zugfestigkeit von mindestens 500 MPa und eine Bruchdehnung von mehr als 5% aufweist und der Aufreißdeckel maximale Aufreißkräfte im Bereich von 40 N oder weniger bei einer Restwanddicke von 60 µm hat.

2. Aufreißdeckel nach Anspruch 1, **dadurch gekennzeichnet, dass** das Stahlblech nach dem rekristallisierenden Glühen und dem Abkühlen ein mehrphasiges Gefüge aufweist, welches Ferrit und mindestens einen der Gefügebestandteile Martensit, Bainit und/oder Restaustenit umfasst.

3. Aufreißdeckel nach Anspruch 2, **dadurch gekennzeichnet, dass** das mehrphasige Gefüge zu mehr als 80% und bevorzugt zu wenigstens 95% aus den Gefügebestandteilen Ferrit, Martensit, Bainit und/oder Restaustenit besteht.

4. Aufreißdeckel nach einem der Ansprüche 1 bis 3, **dadurch gekennzeichnet, dass** das Stahlblech aus einem niedriglegierten Stahl gefertigt ist, welcher Bor und/oder Niob und/oder Titan enthält.

5. Aufreißdeckel nach Anspruch 4, wobei die Gewichtsanteile von Titan und Niob bei weniger als 0,02 % liegen.

6. Aufreißdeckel nach einem der Ansprüche 1 bis 5, **dadurch gekennzeichnet, dass** es sich bei dem Stahlblech um Fein- oder Feinstblech handelt.

7. Aufreißdeckel nach einem der Ansprüche 1 bis 6, **dadurch gekennzeichnet, dass** das Stahlblech nach dem rekristallisierenden Glühen und dem Abkühlen eine Zugfestigkeit von mindestens 500 MPa, bevorzugt von mehr als 650 MPa, und eine Bruchdehnung von mehr als 5%, bevorzugt von mehr als 10% aufweist.

8. Verfahren zur Herstellung eines Aufreißdeckels aus einem kaltgewalzten Stahlblech aus einem un- oder niedriglegierten Stahl mit einem Kohlenstoffgehalt von weniger als 0,1 Gew. % und folgenden Obergrenzen für den Gewichtsanteil der Legierungsbestandteile:
| | |
|---|---|
| - N: | 0,02 %, |
| - Mn: | 0,4 %, |
| - Si: | 0,04 %, |
| - Al: | 0,1 %, |
| - Cr: | 0,1 %, |
| - P: | 0,03 %, |
| - Cu: | 0,1%, |
| - Ni: | 0,1%, |
| - Sn: | 0,04 %, |
| - Mo: | 0,04 %, |
| - V: | 0,04 %; |
| - Ti: | 0,05 %; |
| - Nb: | 0,05 %; |
| - B: | 0,005 %; |
| - und andere Legierungsbestandteile: | 0,05 %, |
| - Rest Eisen. | |
wobei das noch unbeschichtete Stahlblech zunächst mittels Erhitzung des Stahlblechs durch elektromagnetische Induktion rekristallisierend bei einer Aufheizrate von mehr als 75 K/s geglüht und nach dem rekristallisierenden Glühen mit einer Kühlrate von mehr als 1000 K/s unter Verwendung einer Wasserkühlung abgekühlt und anschließend mit einer Schutzschicht beschichtet und zur Herstellung des Aufreißdeckels weiter verarbeitet wird.

9. Verfahren nach Anspruch 8, **dadurch gekennzeichnet, dass** das Stahlblech nach dem rekristallisierenden Glühen und dem Abkühlen mit einer Schutzschicht aus Zinn, Chrom, Aluminium, Zink oder oder Zink/Nickel beschichtet wird.

## Claims

1. A ring-pull top for cans, manufactured from a cold-rolled steel sheet made of an unalloyed or low-alloy steel with a carbon content of less than 0.1 wt.% and the following upper limits for the weight proportions of the alloying components:
| | |
|---|---|
| - N: | 0.02%, |
| - Mn: | 0.4%, |
| - Si: | 0.04%, |
| - Al: | 0.1%, |
| - Cr: | 0.1%, |
| - P: | 0.03%, |
| - Cu: | 0.1%, |
| - Ni: | 0.1%, |
| - Sn: | 0.04%, |
| - Mo: | 0.04%, |
| - V: | 0.04%, |
| - Ti: | 0.05%, |
| - Nb: | 0.05%, |
| - B: | 0.005%, |
| - and other alloying components: | 0.05%, |
| - rest iron, | |
wherein the steel sheet is annealed in a recrystallizing fashion by being heated with electromagnetic induction at a heating rate of more than 75 K/s and cooled after the recrystallizing annealing at a cooling rate of more than 1000 K/s by using a water cooling and subsequently coated with a protective layer and after the recrystallizing annealing and cooling the steel sheet is having a tensile strength of at least 500 MPa and a percentage elongation at fracture of more than 5%, and the ring-pull top has maximum score tearing forces in the range of 40 N or lower at a residual wall thickness of 60 µm.

2. The ring-pull top according to Claim 1, **characterized in that** after the recrystallizing annealing and the cooling process, the steel sheet has a multi-phase structure that comprises ferrite and at least one of the structural constituents martensite, bainite and/or residual austenite.

3. The ring-pull top according to Claim 2, **characterized in that** more than 80%, preferably at least 95%, of the multi-phase structure consist of the structural constituents ferrite, martensite, bainite and/or residual austenite.

4. The ring-pull top according to one of Claims 1 to 3, **characterized in that** the steel sheet is made of a low-alloy steel that contains boron and/or niobium and/or titanium.

5. The ring-pull top according to Claims 4, wherein the weight fraction of Titan and Niob are lower than 0,02%.

6. The ring-pull top according to one of Claims 1 to 5, **characterized in that** the steel sheet is a thin sheet or extra-thin sheet.

7. The ring-pull top according to one of Claims 1 to 6, **characterized in that** after the recrystallizing annealing and the cooling process, the steel sheet has a tensile strength of at least 500 MPa, preferably more than 650 MPa, and a percentage elongation at fracture of more than 5%, preferably more than 10%.

8. A method for producing a ring-pull top of a cold-rolled steel sheet made of an unalloyed or low-alloy steel with a carbon content of less than 0.1 wt% and the following upper limits for the weight proportions of the alloying components:
| | |
|---|---|
| - N: | 0.02%, |
| - Mn: | 0.4%, |
| - Si: | 0.04%, |
| - Al: | 0.1%, |
| - Cr: | 0.1%, |
| - P: | 0.03%, |
| - Cu: | 0.1%, |
| - Ni: | 0.1%, |
| - Sn: | 0.04%, |
| - Mo: | 0.04%, |
| - V: | 0.04%, |
| - Ti: | 0.05%, |
| - Nb: | 0.05%, |
| - B: | 0.005%, |
| - and other alloying components: | 0.05%, |
| - rest iron, | |
wherein the originally uncoated steel sheet is initially annealed in a recrystallizing fashion by heating the steel sheet with electromagnetic induction at a heating rate of more than 75 K/s and cooled after the recrystallizing annealing at a cooling rate of ore than 1000 K/s by using a water cooling and subsequently is coated with a protective layer and further processed for the production of the ring-pull top.

9. Method according to Claim 8, **characterized in that** after the recrystallizing annealing and the cooling process, the steel sheet is coated with a protective layer of tin, chromium, aluminum, zinc or zinc/nickel.

## Revendications

1. Couvercle arrachable pour boîtes, fabriqué à partir d'une tôle d'acier laminée à froid d'un acier non allié ou à alliage faible avec une teneur en carbone inférieure à 0,1 % en poids et des seuils supérieurs suivants pour la proportion en poids des composants d'alliage :
- N : 0,02 %,
- Mn : 0,4 %,
- Si : 0,04 %,
- Al : 0,1 %,
- Cr : 0,1 %,
- P : 0,03 %,
- Cu : 0,1 %,
- Ni : 0,1 %,
- Sn : 0,04 %,
- Mo : 0,04 %,
- V : 0,04 %,
- Ti : 0,05 %,
- Nb : 0,05 %,
- B : 0,005 %,
- et d'autres composants d'alliage : 0,05 %,
- et le reste de fer,
dans lequel la tôle en acier est recuite de façon recristallisante à une vitesse de chauffage supérieure à 75 K/s par chauffage par induction électromagnétique et après le recuit recristallisant, elle est refroidie à une vitesse de refroidissement de plus de 1000 K/s en utilisant un refroidissement à l'eau, et ensuite est revêtue avec une couche de protection, et la tôle en acier après le recuit recristallisant et le refroidissement présente une résistance à la traction d'au moins 500 MPa et un allongement à la rupture de plus de 5 %, et le couvercle arrachable a des forces maximales d'arrachage de l'ordre de 40 N ou moins pour une épaisseur de paroi résiduelle de 60 µm.

2. Couvercle arrachable selon la revendication 1, **caractérisé en ce que** la tôle en acier présente, après le recuit recristallisant et le refroidissement, une structure multiphasique qui comprend de la ferrite et au moins l'un des composants de structure suivants : martensite, bainite et/ou austénite résiduelle.

3. Couvercle arrachable selon la revendication 2, **caractérisé en ce que** la structure multiphasique est constituée à plus de 80 % et de préférence à moins de 95 % en parties de composants de structure suivants : ferrite, martensite, bainite et/ou austénite résiduelle.

4. Couvercle arrachable selon l'une des revendications 1 à 3, **caractérisé en ce que** la tôle d'acier est réalisée en un acier à faible alliage, qui contient du bore et/ou du niobium et/ou du titane.

5. Couvercle arrachable selon la revendication 4, dans lequel les proportions en poids de titane et de niobium se situent à moins de 0,02 %.

6. Couvercle arrachable selon l'une des revendications 1 à 5, **caractérisé en ce que** la tôle d'acier est une tôle mince ou un fer noir.

7. Couvercle arrachable selon l'une des revendications 1 à 6, **caractérisé en ce que** la tôle d'acier après le recuit recristallisant et le refroidissement présente une résistance à la traction d'au moins 500 MPa, de préférence de plus de 650 MPa et un allongement à la rupture de plus de 5 %, de préférence de plus de 10 %.

8. Procédé de fabrication d'un couvercle arrachable en tôle d'acier laminée à froid d'un acier non allié ou à alliage faible avec une teneur en carbone inférieure à 0,1 % en poids et des seuils supérieurs suivants pour la proportion en poids des composants d'alliage :
- N : 0,02 %,
- Mn : 0,4 %,
- Si : 0,04 %,
- Al : 0,1 %,
- Cr : 0,1 %,
- P : 0,03 %,
- Cu : 0,1 %,
- Ni : 0,1 %,
- Sn : 0,04 %,
- Mo : 0,04 %,
- V : 0,04 %,
- Ti : 0,05 %,
- Nb : 0,05 %,
- B : 0,005 %,
- et d'autres composants d'alliage : 0,05 %,
- et le reste de fer,
dans lequel la tôle d'acier encore non revêtue est tout d'abord recuite de façon recristallisante à une vitesse de chauffage de plus de 75 K/s par chauffage de la tôle d'acier par induction électromagnétique et après le recuit recristallisant, est refroidie à une vitesse de refroidissement de plus de 1000 K/s en utilisant un refroidissement à l'eau et est ensuite revêtue avec une couche de protection et est encore transformée pour la fabrication du couvercle arrachable.

9. Procédé selon la revendication 8, **caractérisé en ce que** la tôle d'acier est revêtue après le recuit recristallisant et le refroidissement avec une couche de protection en étain, chrome, aluminium, zinc ou zinc/nickel.
